# EUROPEAN PATENT APPLICATION

(11) **EP 1 291 272 A1**
(43) Date of publication of application: **12.03.2003**
(21) Application number: 02722301.5
(22) Date of filing: 15.04.2002
(51) Int. Cl.: B62J 1/06, B62K 19/36

(54) **DEVICE FOR REGULATING THE POSITION OF BICYCLE SEATS**

(30) Priority: 16.04.2001 ES 200100871; 26.07.2001 ES 200101755
(71) Applicant: Montajes Mecanicos Lezo, S.L., 20100 Lezo (ES)
(72) Inventor: BARANDIARAN SALABERRIA, Javier, E-20013 San Sebastian (ES)
(74) Representative: Urteaga Simarro, José Antonio
(86) International application number: ES0200183
(87) International publication number: WO02083487

(57) **Abstract**

A position adjustment device, in particular for bicycle saddles (A), that combines a set of tubes with a gas-filled cylinder (49), forming a non-turning assembly. This assembly is connected with a base (1) which is secured to the saddle, including an operating lever on the valve shaft (39) of the gas-filled cylinder that causes the saddle to be raised and/or lowered.

## Description

### Purpose of the invention

The invention relates to a position adjustment device for saddles and seats, especially saddles for bicycles and similar, using, at least partially, a technique that includes a gas-filed cylinder that moves longitudinally, but which does not turns, so that it performs the classical function of moving along its shaft, without the unit being subject to the possibility of turning on this said longitudinal shaft.

The said known gas-filled cylinder has a double liner or sleeve, with an inner gas cylinder which is straight and a hollow tube that clasps over it and is provided with an outer longitudinal key. Over this hollow tube, a plastic bushing is placed partially, with an inner longitudinal key groove, at the side of the projection on the valve shaft of the inner gas-filled cylinder. This bushing is in turn clasped by an outer support tube without any axial movement in relation to the said bushing.

The outer support tube is connected at one of its ends to the bushing, as already mentioned, while at the other end it is fixed to the inner gas-filled cylinder shaft outlet.

The inner gas-filler cylinder, together with the tube that clamps it, move together in a longitudinal direction in relation to the bushing and to the outer tube on operating the projection on the valve shaft of the gas-filled cylinder, all by the action of the cylinder shaft which is connected to the said outer tube.

In the present case and in accordance with the invention, the outer tube is provided with a ring-shaped taper in a position close to the end of the plastic bushing and this taper fits onto the free end of the tube on the bicycle frame where the saddle should be positioned.

Once this taper has been supported on the end of the tube on the frame, the end of this outer tube becomes located in the interior of the said bicycle tube, together with the end of the cylinder shaft which is connected to it.

Meanwhile, the gas-filled cylinder, the tube that clasps it, as well as the bushing and the part of the outer tube with the bigger diameter are located outside the frame tube, with the gas-filled cylinder and the tube protruding out from the latter, logically with the projection on the valve shaft so that it can be operated in order to cause the action of the gas-filled cylinder, bearing in mind that the tube that clasps the gas filled cylinder is provided with a longitudinal key groove.

The end which is established in this way is directed towards the position of the bicycle saddle. With a part prepared at its end to provide a base for the saddle, a seating for the previously mentioned projection and an area to situate the means of operation of the valve shaft of the gas-filled cylinder.

The tube, connected in this way to the lower part of a base secured to the saddle, allows contact with the valve shaft of the gas-filled cylinder to enable movement of this base and, consequently, of the saddle.

To do this, the base allows the hollow tube to be fixed in its interior and also has means of access for contact with the end of the valve shaft. This base has two parallel side lugs that start from the central cavity that houses the hollow tube. Through which the fixing of the said hollow tube is carried out by means of a bolt.

The space provided between the lugs is used to enable a manual operating lever to pass through.

In accordance with the invention, the position of the set of cylinders in relation to the bicycle frame is claimed, with the base of the adjustment device that shows the area for seating and fixing the saddle in a forward position in relation to the tube of the frame, i.e. betwccn the tube and the handlebars, whereas the area for entry and fixing of the hollow tube and the gas-filled cylinder is situated behind the tube of the frame. In the same way, the operation of a mechanism on the end of the valve shaft is claimed.

This arrangement means that, taking into account the position of the user on the bicycle, the internal mechanism of the gas-filled cylinder and other component parts works with greater security and without risk of seizing up.

On the other hand, the upper part of the area of the base that receives the gas-filled cylinder is provided with a transversal shaft, on which the turning of the component that causes the operation of the projection on the valve shaft of the cylinder is carried out.

This operating system can either be by means of a manual lever or through another lever connected to a cable that enable the valve shaft to be operated from a distance, for example from the handlebars of the bicycle.

In the supposed case of a manual lever, it has a specific shape, with an elongated arm so that it can be operated by the user and a closed hollow area of a rectangular shape and irregularly shaped sides, that partially clasp the base.

The irregularly shaped sides of this closed are have two straight lower stretches and another two upper ones, connected by another two vertical parts, which clasp the sides of the base. The two upper stretches have aligned holes and receive the ends of the previously mentioned upper transversal shaft.

Given that the base has a seating area for the saddle towards its forward part, the arm of the lever extends towards the handlebars and below the saddle so that it can be operated by the user. Therefore, the closed area of the manual lever clasps the base at the front and sides, starting precisely from the seating area for the saddle and extending partially towards the entry area of the gas-filled cylinder.

At this end, the transversal part of this closed area will be responsible for making contact with the projection on the valve shaft of the cylinder. This transversal end reaches the area between the fixing lugs and in one portion of this area a transversal upward opening is made that allows the said end to pass through.

The central part of this end makes contact with the projection on the valve shaft when the lever turns on the upper transversal shaft in the base on being operated by the user.

In the supposed case of cable operation, a straight slim flat lever is used, which is housed in the space between the lugs in the base, with a hole at its inner end in order to receive the upper transversal shaft in the base, on which it turns, and with its other end protruding outwards.

As this lever is perfectly centred in the base, it is just above the position of the projection on the valve shaft of the gas-filled cylinder.

The end of the lever is fixed to the end of the operating cable by known means, with this assembly also including a support responsible for acting as the seating for the end of the cable conductor so as to be able to turn the lever.

This support has a special shape, with two flat surface areas that form a right angle between themselves. One of these flat areas is housed in the space between the lugs and the other area protrudes outwards.

The portion which is housed between the lugs does so on the rear side of the base and has two holes. One of these holes allows the free passage of the tightening bolt that passes between the lugs in order to fix the hollow tube of the gas-filled cylinder. The other hole is provided for the support itself to be fixed to the lugs by means of an ancillary bolt.

The outer portion of the support protrudes from the interior, and its thickness is supported on the thickness of the lugs. At the farther opposite end of the base of the assembly, a recess is provided, aligned approximately with the continent plane of the inner portion of this support.

Once the support is secured in this way, the end of the cable conductor is fixed to the recess, while the other end of the cable is connected to the lever.

The lever in this case, together with the support for the cable, protrude towards the rear part of the base, with the cable extending to the handlebars so that it can be operated from a distance.

All the details of the invention can be appreciated in greater detail by referring to the attached sheets of drawings, where the following are represented:
- Figure 1 represents an elevation of the base with the manual operating lever assembled, in accordance with the invention.
- Figure 2 is a top view of Figure 1.
- Figure 3 is an elevation of the manual operating handle, in accordance with the invention.
- Figure 4 is a top view of Figure 3.
- Figures 5 and 6 show the two positions, in operation and at rest, of the adjustment device as regards the manual operating handle, in accordance with the invention.
- Figure 7 is an elevation of the base of the invention with the cable operation.
- Figure 8 is a top view of Figure 7.
- Figure 9 represents two views of the cable support, in accordance with the invention.
- Figures 10 and 11 show two views, in operation and at rest, of the cable operated adjustment device in accordance with the invention.
- Figure 12 is an elevation of the cross section of the double liner cylinder used as assistance for the invention.
- Figures 13 to 17 show different components of the cylinder in Figure 12.

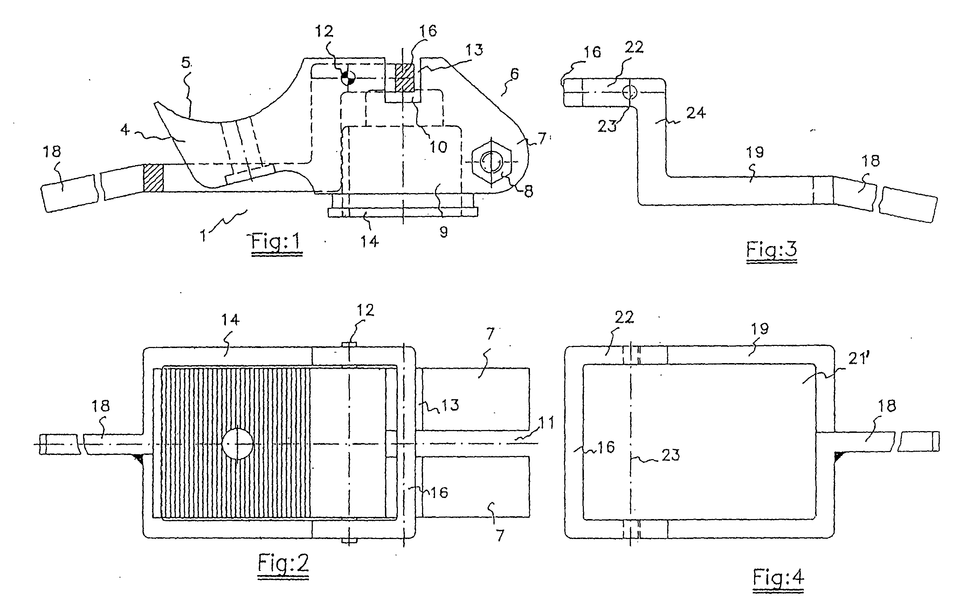

With regard to Figures 1 and 2, we emphasis the base (1) of the adjustment device with its inner cavity (9) in order to receive the hollow tube and the gas-filled cylinder through its lower side (14). The projection on the valve shaft of the gas-filled cylinder reaches the upper cavity (10) so that it can be operated by the transversal end (16) of the lever (18), which turns on the upper transversal shaft (12).

The base (1) has the lugs (7) and the cavity (11) in one of its portions (6), with the fixing bolt (8), and at the other end is the portion (4) used as the seating (5) for the lower part of the saddle.

The lever (18, 19) clasps the base (1) partially at the sides, and pivots on the shaft (12), with the transversal end (16) housed in the transversal openings (13) in order to make contact with the projection on the valve shaft of the cylinder.

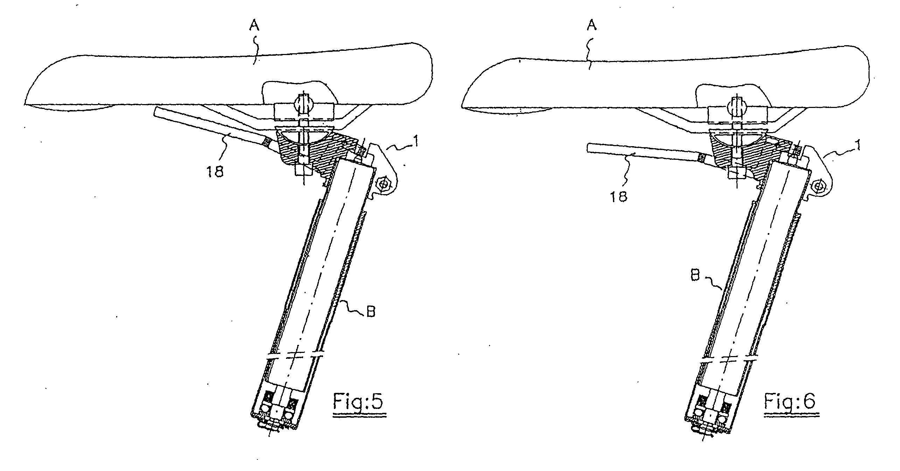

In Figures 3 and 4 we can see the shape of the manual lever, also included in Figures 1 and 2, with its arm (18) and its closed portion (21') with an irregularly shaped elevation, (19, 24, 22), in which we point out the holes (23) to receive the protruding ends of the shaft (12) and the transversal end (16) for contact with the projection on the valve shaft.

The arrangement shown in Figures 5 and 6 enables us to appreciate how, in Figure 5, the lever (18) is in operation, making contact with the projection on the valve shaft, with the saddle (A) seated on the forward part of the base (1) and with the unit (B) extended so as to be able to adjust the height of the said saddle.

Looking now at Figure 6, the lever (18) is shown at rest, with no contact with the valve shaft and with the unit (B) fixed in the position desired by the user.

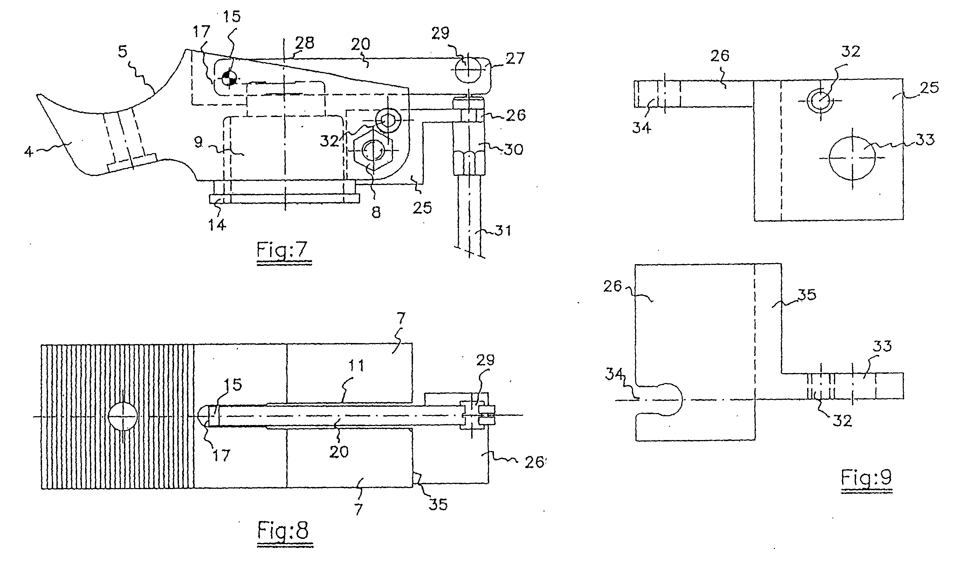

In accordance with Figure 7 and 8, we can observe the position of the cable operated lever (20), connected by its end (17) to the upper transversal shaft and housed in the cavity (11) between the lugs (7). This lever is positioned over the vertical point of the axis (28) on which the projection on the valve shaft moves.

The end (27) of this lever (20) also receives the end (29) of the cable that comes from the conductor (31) and its base (30) secured to the support (25, 26). Also illustrated in this drawing are the relative positions of the bolt (8) for closing or tightening the lugs (7) and the bolt (32) that fixes the support (25, 26) to the said lugs.

Operation of the cable pulls the lever (20) downwards until it makes contact with the projection on the valve shaft, causing the movement of the gas-filled cylinder and making it possible to adjust the height of the saddle.

With reference to Figure 9, the support for the operation of the cable is shown with its flat area (25) to be housed between the lugs (7) of the base (1) and its other flat area (26) at 90° to the former, and with a recess cut in the latter flat area (26) and aligned with the area (25) for fixing the end body (30) of the cable conductor.

Also to be emphasised are the two holes in the flat area (25); the hole (33) to enable passage of the fixing bolt (8) between the lugs (7) and the hole (32) for this part itself to be fixed in the space (11) between the lugs.

The side surface (35) of the area (26) is used to hold and fix this support on the outer thickness of the lugs, as shown in Figures 7 and 8.

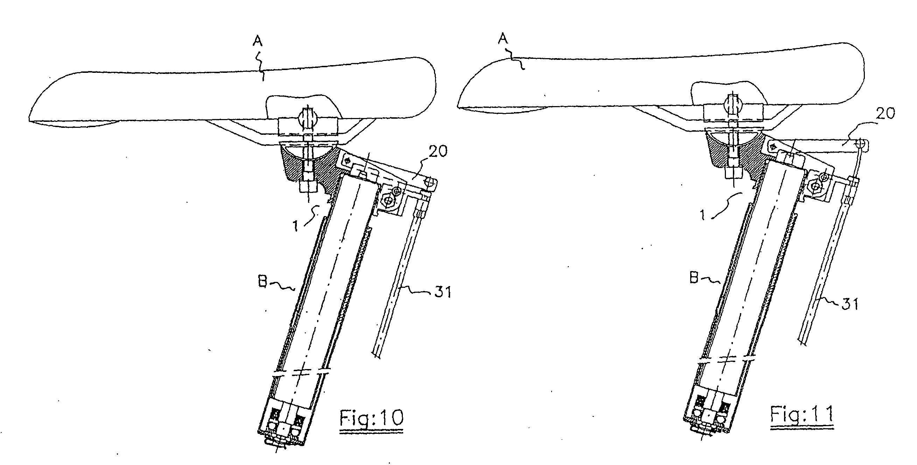

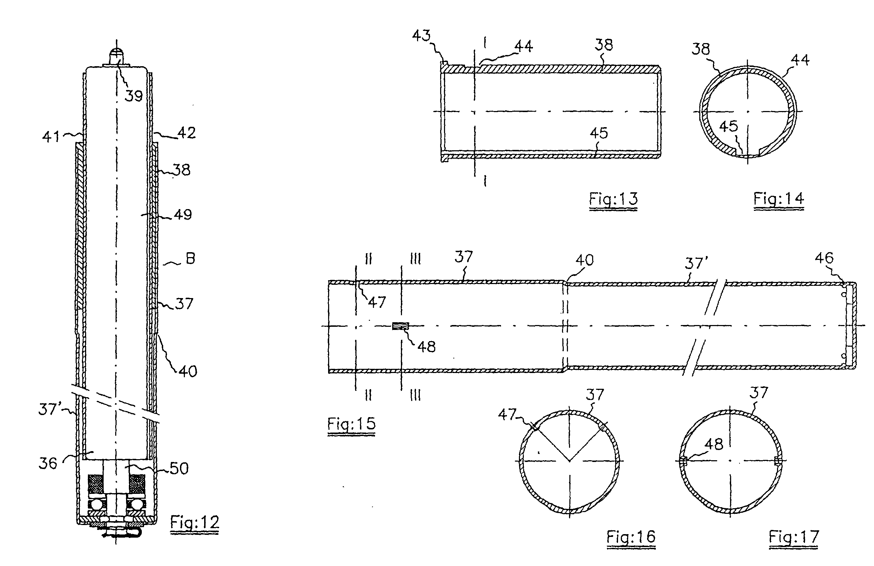

Figures 10 and 11 represent the two positions of the lever (20), in operation with the said lever down and making contact with the projection on the valve shaft, and at rest with the lever up.

Although the bases (1) shown in Figures 1 - 2 and 7 - 8, respectively, are illustrated with different configurations for one operating system or the other, there is no disadvantage whatsoever in making both parts with a single common configuration. To do this, it would be sufficient to prolong the space (11) in Figures 1 and 2 so as to be able to receive the lever (20) and make the hole (32) so as to be able to fix the support (25, 26) in Figures 7 and 8.

In the same conditions, it would be sufficient in Figures 7 and 8 to make the openings (13) in Figures 1 and 2, so as to be able to receive the manual operating lever (18).

With regard to Figure 12, we can appreciate the plastic bushing (38) that claps the tube, and in turn is arranged inside the outer tube (37). The key groove of this bushing (38) enables the cylinder unit (49) with its tube to slide in its interior.

The outer tube (37) that clasps the bushing has a taper (40), up to which the bicycle frame tube, not illustrated here, can reach, so that the portion (37') becomes housed in its interior.

The end of the cylinder shaft is connected to the free end of the portion (37'), with which, as the cylinder (49) protrudes upwards with its tube (42) and as these are also secured to the body portion (6), the operation of the valve shaft (39) causes the said cylinder (49) and its tube to raise or lower the saddle.

We also point out the position of the tube (41) that clasps the cylinder and its longitudinal key, on which the bushing (38), provided with its corresponding key groove, will move.

It is also possible to observe here with greater clarity how the ends of the cylinder (49) and of the tube (41) enter into the body portion (6) and more specifically into the central cavity provided for this purpose in the said body.

The bushing (38) in Figures 13 and 14 (a cross section across I-I in Figure 13) shows the slot (44) to receive some notches on the outer tube (37) and the key groove (45) to guide the key (42) of the tube (41).

The outer tube (37) in Figures 15, 16 and 17 shows the notches (47) and the smaller diameter end portion (37'), with its end for fixing to the end of the cylinder shaft (50).

In this tube (37, 37'), we can also observe the two studs (48) that protrude inwards. During assembly, these studs put pressure on the plastic material of the bushing, in order to prevent the tube from turning.

Usually, two of these studs are placed, with which the desired effect is achieved. Nonetheless, the number of studs can be greater than stated.

The position of the studs (48) can be appreciated in Figures 15 and 17 (a cross section across III-III in Figure 15) ands the position of the notches (47) can also be observed in Figures 15 and 17 (a cross section across II-II in Figure 15).

## Claims

1. Position adjustment device for bicycle saddles, that uses a double liner gas-filled cylinder based on an inner straight sided gas-filled cylinder (49), clasped by a hollow tube (41) provided on its exterior with a longitudinal key (42), which slides in the also longitudinal internal key groove (45) of a plastic bushing (38) that clasps the upper portion of the hollow tube (41) on the side near the projection on the valve shaft (39), with this tube receiving another outer support tube (37) without any axial movement in relation to the bushing, at the end of which is fixed the end of the protruding shaft (50) of the inner cylinder, which is **characterised by**,
- the outer support tube has a tapered or stepped area (40) that delimits an lower area with a smaller diameter (37'), which is housed inside the tube of the bicycle frame until it reaches the said taper (40) and another upper area (37) which has at least two separate areas of 180 degrees provided with studs (48) that protrude inwards and put pressure on the plastic bushing (38), thus preventing the outer support tube from turning, in which the end of the gas-filled cylinder (49) with the hollow tube (41) are positioned towards the lower portion of the bicycle saddle, with the projection (21) on the valve shaft of the said gas-filled cylinder,
- a base (1) arranged below the saddle (A) has a hollow lower portion (9) that receives a hollow tube (41) with a key groove that receives the key (42) of the tube (41), as well as another portion (4, 5) onto which the saddle is secured,
- the cavity (9) in the base (1) is open downwards, providing access towards the projection (39) on the valve shaft of the as-filled cylinder (49), and the upper part of the base (1) has a transversal shaft (12, 15), on which an operating lever (18, 20) turns, that acts on the said projection (39) when it is operated from the exterior either manually or by means of a cable.

2. Position adjustment device for bicycle saddles, in accordance with claim 1, **characterised in that** the base (1) has. Preferably, the seating (4, 5) for the saddle (A) between the cavity (9) and the forward part of the saddle.

3. Position adjustment device for bicycle saddles, in accordance with claims 1 and 2, **characterised in that** the lever has an end portion (18) towards the forward part of the saddle that continues into another that forms a large closed cavity (21') whose sides are formed by two parallel sections (19, 22) connected by another section (24) perpendicular to both, with the highest sections (22) provided with aligned holes (23) in order to receive the protruding ends of the shaft (12, 15) provided in the base (1), in which this closed portion (21') partially clasps the sides of the base (1) with its transversal end (16) positioned over the projection on the valve shaft of the gas-filled cylinder through a transversal opening (13) made in the upper part of the base (1), adjacent and parallel to the transversal shaft (12).

4. Position adjustment device for bicycle saddles, in accordance with claims 1 and 2, **characterised in that** in the cable operation, the lever (20) is straight and is housed in the upper part of the cavity (11) in the base (1), with one end (17) perforated and receiving the transversal shaft (15), an intermediate area over the projection on the valve shaft of the gas-filled cylinder and another area towards the exterior (27) to which the end pull item (29) for the cable is secured, **in that** below this lever is situated a support for seating the end (30) of the cable conductor (31), with this support having two flat areas at a right angle to each other, one (25) being housed on the base (1), in the space between the lugs (7), suitably fixed by a bolt (32) to these lugs and provided with a hole (33) in order to enable the passage of the connecting bolt (8) between the said lugs, **in that** the other flat area (26) is provided at its outer edge with a recess (34) into which the end (30) of the cable conductor (31) is fixed and another edge (35) which is supported on the front of the lugs.
